# EUROPEAN PATENT APPLICATION

(11) **EP 1 862 809 A1**
(43) Date of publication of application: **05.12.2007**
(21) Application number: 06114864.9
(22) Date of filing: 01.06.2006
(51) Int. Cl.: G01S 1/00

(54) **GNSS signal integrity indicator**

(71) Applicant: The European GNSS Supervisory Authority, 1049 Brussels (BE)
(72) Inventor: Glaser, Oswald, 70825 Korntal-Münchingen (DE); Birli, Hans, 70825 Korntal-Münchingen (DE)
(74) Representative: Schmitt, Armand

(57) **Abstract**

In a method for providing an integrity indicator pertaining to a global navigation satellite system, the integrity indicator is derived from a comparison of at least two values indicative of ionospheric refraction, which have been acquired in different ways.

## Description

### Technical field

The present invention generally relates to global navigation satellite systems (GNSS) and, more particularly, to a method for providing an integrity indicator for a GNSS signal at receiver level.

### Background Art

Global navigational satellite systems (GNSS) are known and include, for instance, the Global Positioning System (GPS), the Russian global navigational satellite system (GLONASS) and the future European Galileo satellite system. GNSS receivers receive pseudo random noise (PRN) coded signals from a set of satellites orbiting on well-defined trajectories and continuously transmitting these signals.

A GNSS receiver determines its position by timing how long it takes the coded radio GNSS signal to reach the receiver from a particular satellite within a direct line-of-sight, i.e. the propagation time of the signal. The receiver internally generates a set of codes substantially corresponding to those codes transmitted by the satellites. To obtain the propagation time, the receiver determines how far it has to shift its own codes in time to match the codes transmitted by the satellites. The distances from the satellites to the receiver are calculated from the propagation times for each satellite multiplied by the speed of light. Because of an a priori unknown offset between the receiver clock and GNSS time, the calculated distances differ from the "true" range and are therefore called pseudoranges. The pseudoranges may further deviate from the true ranges because of other error sources. For instance, the so-called ionospheric and tropospheric errors are due to the satellite signal passing through the ionosphere and troposphere on its way to the user receiver. These error terms are usually referred to as "User Equivalent Range Error" (UERE). Pseudorange errors can be compensated partially either by calculation models for these errors or by differential corrections.

Conventional GNSS receivers typically use the signal of four satellites to accommodate the timing offset between the receiver clock and GNSS time. By receiving GNSS signals from four or more satellites, a receiver can accurately determine its position in three dimensions (e.g. longitude, latitude, and altitude) and time of the system, which deviates in a known manner from UTC time. Signals from additional satellites can be used to improve the position solution.

A measurement of range may also be derived from the phase of the carrier of the GNSS signal, i.e. the sine wave that is modulated with the PRN code as received or as reconstructed (in case the carrier frequency is suppressed by the modulation). The phase of the carrier received or reconstructed in the GNSS receiver is referred to as carrier phase. Measuring the carrier phase, hereinafter called "phase measurement", provides a much more accurate measurement of pseudorange, but with an uncertainty of an integer number of wavelengths of the carrier wave. In most applications, carrier phase alone thus cannot be used alone to determine one's position, therefore it is then used in conjunction with supplementary measurements, e.g. code measurements as discussed above or with additional phase measurements of carriers of other GNSS signals.

The quality of the position solution is negatively affected by errors of the acquired propagation times. One major source of errors are multipath signals, i.e. signals that were reflected or diffracted somewhere on their way from the satellite to the receiver and hence did not follow the direct line-of-sight. Multipath sensitivity of the GNSS signal depends inter alia on the signal bandwidth and the modulation scheme. For example, the GPS P-code signals are significantly less sensitive to multipath than the C/A code signals. One of the design goals of new signals like GPS L5, Galileo E5a and E5b is to mitigate multipath. Use of circular-polarised GNSS signals and special antenna design can reduce multipath errors to a certain extend. Other approaches of multipath mitigation can be found in EP 0 552 975 A2 or WO 01/39698 A1.

Another important error source is ionospheric refraction causing delays of the GNSS signals. These ionospheric delays depend on frequency in a known manner. One can calculate the ionospheric error by measuring at the receiver the relative delay between two GNSS signals of a same satellite that are at different frequencies. This is true for a code measurement as well as for a phase measurement, whereby the sign of the ionosphere error in the code measurement is opposite to the sign of the ionosphere error in the phase measurement. This approach requires that the satellites emit GNSS signals in least in two distinct frequency bands and, moreover, that the receiver is capable of receiving and evaluating these signals.

Dual frequency issues have been discussed since the early days of GNSS for eliminating the ionospheric error. The condition of at least dual band emission is fulfilled in the existing GNSSs. Regarding GPS, each GPS satellite continuously transmits in two frequency bands: the L1 band, centred on 1575,42 MHz and the L2 band, centred on 1227,6 MHz. In the first decades of GPS, the L2 band was reserved for the military P-code transmission, whereas civil users had only limited access to this signal, e.g. by performing codeless phase measurements. The currently launched modernised GPS satellites will provide also civil signals on L2. In the course of modernisation of the existing GPS system, the L5 band, centred on 1176,45 MHz will be added. The future Galileo satellites will transmit in the L1 band (called E2-L1-E1 band with respect to the Galileo system) in the L5 band (called also E5a), the E5b band centred on 1207,14 MHz and the E6 band centred on 1278,75 MHz. It should be noted, however, that some of the GNSS signals may be encrypted. At receiver level, a decoder is required to have full access to these signals. Eliminating or reducing of ionospheric delay errors by a dual-frequency approach is, for instance, addressed in US 5,903,654 or in WO 03/054572 A1.

The accuracy of the position solution can be further enhanced in a differential GNSS, which utilises in addition to the satellites, at least one ground reference station located at a known position. The reference station receives GNSS positioning signals from the satellites in view (i.e. above the horizon) and calculates predicted distances to the satellites based upon the known reference station location. Based upon differences between the predicted distance from the satellite to the reference station and the actual measurements, the base station computes corrections for each individual satellite, which are wirelessly transmitted to a GNSS user's GNSS receiver. The GNSS receiver uses the corrections in addition to the received GPS satellite signals to calculate its position more accurately. See e.g. US 6,198,430 B1 for more information on differential GNSS.

In some applications of GNSS, such as safety-of-life applications, the error of the computed position solution must be monitored so that an alarm can be issued if the estimated error exceeds the maximum allowable error (alarm limit). As for a user there exists usually no way to observe the navigation error directly, error estimation based on so-called "integrity indicators" is used. For instance, integrity indicators can be statistical predictions (e.g. dependent on satellite elevation) about the impact on the position computation of errors caused by each individual satellite. This yields statistical quantities referred to as "protection levels". These protection levels can be calculated for the assumptions of different error scenarios and are compared with thresholds ("alarm limits") that are defined for the different kinds of operation. If a protection level (i.e. the estimated error) exceeds the alarm limit then the computed position should not be trusted. Other current integrity indicators are derived from single-frequency measurements of GNSS signals such as e.g. the carrier-to-noise ratio of the signals, the code-carrier divergence and similar indicators. These indicators are used to eliminate satellite signals with insufficient performance from the position determination as well as from the protection level calculation. Error estimation should be as accurate as possible, as conservative error estimation increases the rejection rate of the computed position solution and thus leads to reduced availability of the navigation service.

Today's integrity indicators achieve a performance with an integrity risk below 10⁻⁷ for an exposure time of 150 seconds. Integrity risk is defined as the probability during a given period of operation that an error, whatever the source, might result in a computed position error exceeding the alarm limit and the user not being informed within the specific predefined time to alarm. In high performance applications of GNSS, there is a high integrity requirement up to 10⁻⁹ for 150 seconds.

### Object of the invention

It is an object of the present invention to provide another integrity indicator. This object is achieved by the method as claimed in claim 1.

### General Description of the Invention

According to the present invention, an integrity indicator pertaining to a GNSS is derived based upon a comparison of at least two values indicative of ionospheric refraction, which have been acquired in different ways, i.e. at least two differently obtained values indicating, at receiver level, the effect on the GNSS signals caused by ionospheric refraction. The values indicative of ionospheric refraction will be referred to hereinafter as "ionospheric refraction values". Ionospheric refraction values can be expressed in terms of total electron content (TEC). It should be noted, however, that in the context of the present invention the ionospheric refraction values can also be expressed e.g. in terms of a delay caused by the ionosphere between a pair of GNSS signals, in terms of a corresponding distance or by a corresponding dimensionless coefficient. Ways to obtain a ionospheric refraction value may include determination of a ionospheric refraction value by measurements at receiver level, determination of a ionospheric refraction value by measurements at a location remote from the receiver and subsequent communication of the remotely determined ionospheric refraction value to the receiver. The integrity indicator is thus derived from a consistency check of at least two in principle redundant ionospheric refraction values acquired by different methods or by using different input measurements. As will be appreciated, the integrity indicator provided according to the present method will help to achieve the integrity requirements in high performance applications of GNSS.

In particular, a method for providing an integrity indicator at receiver level can comprise the steps:
receiving a first GNSS signal at a first frequency and a second GNSS signal at a second frequency distinct from the first frequency;
determining a first ionospheric refraction value based upon an actual delay between the first and second GNSS signals, i.e. determining the actual delay between the first and second GNSS signals and taking this actual delay as value indicative of ionospheric refraction or transforming this actual delay into another expression indicating ionospheric refraction, e.g. in terms of total electron content;
acquiring at least one second ionospheric refraction value;
comparing the first and second ionospheric refraction values; and
deriving the integrity indicator from the comparison, i.e. taking a direct or
indirect result of said comparison as integrity indicator.

It will be noted that first and second GNSS signals are received from the same satellite. Ionospheric refraction causes different signal propagation times from the satellite to the receiver depending on the frequencies of the signals, so that the first and the second GNSS signals may arrive at the receiver with a certain time delay between them. The receiver determines the actual delay, which yields a first ionospheric refraction value. Those skilled know the relationship between ionospheric refraction at the given frequencies and the delay between the signals. With this known relationship, the actual delay between the signal can either be used as is as a value indicative of ionospheric refraction or be transformed into another expression using the known relationship. The first ionospheric refraction value is then compared to at least one other ionospheric refraction value. The integrity indicator derived from the result of this comparison can be taken into account for computing an error estimation of a position solution and/or be used to exclude the concerned GNSS signal(s) from the position determination and/or a protection level calculation. If the error estimation based on the remaining, i.e. the not excluded, GNSS signals exceeds the alarm limit, the user can be informed that the computed position solution is likely to be less accurate than specified.

A skilled person may note that the actual delay between the signals may be affected by other error sources than ionospheric refraction. Multipath, for instance, can cause a contribution to the overall delay between two signals. The ionospheric refraction value derived from such a delay with a multipath component does usually not correspond to the actual ionospheric refraction. Nevertheless, this does not limit the usability of the integrity indicator derived from the comparison of at least two ionospheric refraction values: whether a significant timing error is caused by multipath or ionospheric refraction, is indeed irrelevant, as the signal is corrupt in both cases.

The integrity indicator may be scalar number, e.g. a binary indicator, taking a first value indicating that the first ionospheric refraction value and the at least one second ionospheric refraction value match within a certain range or a second value indicating that that the first ionospheric refraction value and the at least one second ionospheric refraction value do not match. Alternatively, the integrity indicator can take more than two values, depending on the degree of correspondence between the first and the second ionospheric refraction values. The skilled person will appreciate that the present method can easily be implemented in a dual frequency receiver by hardware and/or software means.

According to a preferred embodiment of the invention, the receiver calculates the at least one second ionospheric refraction value based upon modelled ionosphere data. In this case, the step of acquiring the at least one second ionospheric refraction value comprises receiving the modelled ionosphere data. The modelled ionosphere data can be static and/or dynamic and may for instance represent a map of the ionosphere. It will be appreciated that such modelled ionosphere data may be broadcast by the satellites within the GNSS signals. Such data may also be communicated to the GNSS receiver by means of a reference station, for instance, in case of Assisted-GNSS within an assistance data message. For calculating the at least one second ionospheric refraction value, the receiver may take into account satellite elevation, satellite ephemerides data almanac data, estimations of the receiver's position, etc. The second ionospheric refraction value(s) can e.g. be calculated by ray-tracing between the satellite and the receiver and using the map of the ionosphere. Where available, the calculation may be additionally based on evaluation of signals from a satellite-based augmentation system (SBAS), such as EGNOS, WAAS or MSAS.

There are other ways to acquire the second ionospheric refraction value. In case there are at least two available frequency pairs (i.e. at least three different frequencies), the actual delay between the GNSS signals of a first pair of frequencies can be used to determine a first ionospheric refraction value and the actual delay between the GNSS signals of a second pair of frequencies to determine a second ionospheric refraction value. If the difference between the first and second ionospheric refraction values exceeds a certain predetermined threshold, this may show some irregularity.

In particular, according to another preferred embodiment of the invention, acquiring the at least one second ionospheric refraction value mentioned above comprises:
receiving a third GNSS signal at a third frequency, distinct from the first frequency and from the second frequency;
determining a second ionospheric refraction value based upon an actual delay between the first and third GNSS signals, i.e. determining the actual delay between the first and third GNSS signals and using this actual delay as value indicative of ionospheric refraction or transforming this actual delay into another expression of the ionospheric refraction.

Alternatively or additionally, acquiring the at least one second ionospheric refraction value comprises:
receiving a third GNSS signal at a third frequency, distinct from the first frequency and from the second frequency;
receiving a fourth GNSS signal at a fourth frequency, distinct from the first frequency, from the second frequency and from the third frequency;
determining a second ionospheric refraction value based upon an actual delay between the third and fourth GNSS signals, i.e. determining the actual delay between the first and third GNSS signals and using this actual delay as value indicative of ionospheric refraction or transforming this actual delay into another expression of the ionospheric refraction.

It will be appreciated that, in case four GNSS signals at four different frequencies are used for determining two ionospheric refraction values, a failure can be detected more reliably, i.e. with a higher probability, than in case only three GNSS signals at three different frequencies are used. Indeed, in the latter case, one GNSS signal is common to the two frequency pairs and a failure in the common GNSS signal might not be detected in the comparison of the two ionospheric refraction values due to error cancelling. The option that can be chosen however depends on how many GNSS signals are broadcast by the satellites.

A skilled reader will note that there are several parameters that may impact the usability of a frequency pair for determining a ionospheric refraction value. For instance, the frequencies of a given frequency pair are preferably widely spaced in the frequency domain because determination of ionospheric refraction is more accurate if the frequencies are not close to each other. Formulas describing how error propagation deteriorates the measurement of ionosphere refraction as a function of the frequency values are well known in the relevant literature. As will be appreciated with regard to aeronautical applications, Galileo will provide two appropriate frequency pairs that are within the protected aeronautical frequency bands (L1/E5a and L1/E5b). In contrast, the future modernised GPS will only provide a single frequency pair within the aeronautical protected bands (L1 /L5).

According to yet another preferred embodiment of the invention, the at least one second ionospheric refraction value is acquired from a reference station, which may terrestrially broadcast a second ionospheric refraction value to the remote receivers of the users. The second ionospheric refraction value can be determined in several ways, for instance by numerical modelling of ionospheric refraction. The second ionospheric refraction value can also be derived from a measurement, at the reference station, of the delay between the first and second GNSS signals. Basically, if the ionospheric refraction value measured at the reference station differs from the ionospheric refraction value measured at the user's receiver are not in agreement, this is an indication of the presence of some error source, provided that the distance between the reference station and the user's receiver does not exceed certain limits. In stationary reference stations, protective measures against multipath or other error source besides ionospheric error can usually be better implemented than in a mobile GNSS receiver. The second ionospheric value provided by the reference station thus can usually be considered as reliable. The reference station can derive the second ionospheric value from the same GNSS signals as the remote receiver uses to determine the first ionospheric refraction value. The reference station can also use GNSS signals of a second frequency pair, not used in the remote receiver, to determine the second ionospheric refraction value.

Naturally, the integrity indicator computed in the receiver can be a function of more than two ionospheric refraction values, for instance, if one combines measuring two different frequency pairs, numerical simulation of ionospheric refraction and/or acquiring a measurement from a remote reference station.

To determine a delay between two GNSS signals, a receiver preferably performs both code measurements and carrier-phase measurements. A smoothed ionospheric refraction value can then be derived from these code and carrier-phase measurements in a smoothing step using Hatch-filter techniques (see e.g. EP 0 609 935 B1) or optimal filter techniques based on Kalman filters. Preferably, the step of deriving the first ionospheric refraction value and/or the step of deriving the second ionospheric refraction value use the same filtering technique. Today this is usually implemented by a Hatch filter, but preferably an optimal filter technique based on a Kalman filter is used. For more details on optimal filter techniques, the interested reader is referred to the thesis of Manuel Martin Neira, "Application of the Global Navigation Satellite Systems to Spacecraft Landing, Attitude Determination and Earth Observation Constellations", presented at the Escuela Téchnica Superior de Ingenieros de Telecomunicaciones de la Universitat Politècnica de Catalunya, en Barcelona, España. Using optimal filter techniques can reduce measurement noise of the ionospheric refraction values and/or eliminate other effects that might deteriorate the significance of the ionospheric refraction values acquired.

The present invention also relates to a GNSS receiver comprising means for acquiring at least two values indicative of ionospheric refraction by different ways and means for deriving an integrity indicator from a comparison of these at least two values. In particular, such a GNSS receiver may comprise:
means for receiving a first GNSS signal at a first frequency and a second GNSS signal at a second frequency distinct from said second frequency,
means for determining a first ionospheric refraction value based upon an actual delay between said first and second GNSS signals, i.e. means for determining this actual delay and, depending on the embodiment, for transforming this actual delay into another expression indicating ionospheric refraction;
means for acquiring at least one second ionospheric refraction value;
means for comparing said first and second ionospheric refraction values;
and
means for deriving an integrity indicator from said comparison.

It will be appreciated that the receiver can be a mobile receiver (portable or integrated into a vehicle) or a stationary receiver (for instance at a reference station of a differential GNSS).

According to a preferred embodiment of the GNSS receiver, the means for acquiring said at least one second ionospheric refraction value is adapted for receiving modelled ionosphere data and calculating the second ionospheric refraction value based upon the modelled ionosphere data. The receiver may comprise a memory for storing the modelled ionosphere data and a processor for calculating the second ionospheric refraction value. The receiver can acquire the modelled ionosphere data by decoding a message broadcast by a satellite within the GNSS signal. In case of an Assisted-GNSS receiver, the modelled ionosphere data may be acquired via a communication link to a reference station. For calculating the at least one second ionospheric refraction value, the receiver may be configured to take into account satellite elevation, satellite ephemerides data almanac data, estimations of the receiver's position, etc. Preferably, the receiver is equipped for receiving and using data provided by a satellite-based augmentation system, such as EGNOS, WAAS or MSAS. The receiver may, for instance, use the data from a satellite-based augmentation system to update modelled ionosphere data stored in memory. According to a second preferred embodiment of the GNSS receiver, the means for acquiring the at least one second ionospheric refraction value comprises:
means for receiving a third GNSS signal at a third frequency, distinct from the first frequency and from the second frequency;
means for determining a second ionospheric refraction value based upon an actual delay between the first and third GNSS signals, i.e. means for determining this actual delay and, depending on the embodiment, for transforming this actual delay into another expression indicating ionospheric refraction.

Alternatively or additionally, the means for acquiring the at least one second ionospheric refraction value comprises:
means for receiving a third GNSS signal at a third frequency, distinct from the first frequency and from the second frequency;
means for receiving a fourth GNSS signal at a fourth frequency, distinct from the first frequency, from the second frequency and from the third frequency;
means for determining a second ionospheric refraction value based upon an actual delay between the third and fourth GNSS signals, i.e. means for determining this actual delay and, depending on the embodiment, for transforming this actual delay into another expression indicating ionospheric refraction.

According to yet another preferred embodiment of the invention, the means for acquiring the at least one second ionospheric refraction value comprises means for communicating with a remote reference station. The second ionospheric refraction value(s) may be computed at the reference station, which disseminates this information to the GNSS receivers in its neighbourhood. Alternatively, the reference station sends data from which a second ionospheric refraction value can be derived by the receiver, for example a measured delay value of a certain frequency pair. As will be appreciated, means for communicating with a remote reference station can be combined with means for receiving several frequency pairs.

As will be appreciated, the means for determining the first value indicative of ionospheric refraction and/or the means for determining the second value indicative of ionospheric refraction may use an optimal filter technique.

### Brief Description of the Drawings

Preferred embodiments of the invention will now be described, by way of example, with reference to the accompanying drawings in which:
- Fig. 1:: is a flow diagram of a first method for providing an integrity indicator;
- Fig. 2:: is a flow diagram of a second such method;
- Fig. 3:: is a flow diagram of a third such method;
- Fig. 4:: is a block schematic diagram of a mobile GNSS receiver equipped for triple-frequency reception;
- Fig. 5:: is a block schematic diagram of a GNSS system with a mobile receiver and a stationary reference station providing assistance data to the mobile receiver;
- Fig. 6:: is a more detailed block schematic diagram of steps 12 to 20 of Fig. 1 according to a first embodiment;
- Fig. 7:: is a more detailed block schematic diagram of steps 12 to 20 of Fig. 1 according to a second embodiment;
- Fig. 8:: is a schematic view of an ionosphere anomaly.

### Description of Preferred Embodiments

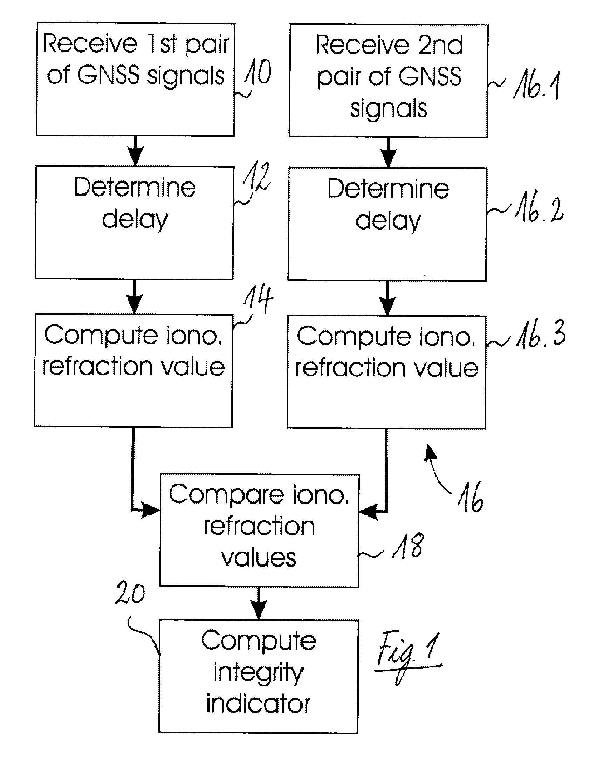

Figs. 1 to 3 show flow diagrams pertaining to different embodiments of a method for providing an integrity indicator in a mobile or a stationary GNSS receiver. At 10, a first pair of GNSS signals is received from a GNSS satellite, for instance, Galileo's L1 and E5a signals. The delay between these signals is determined at 12 and a first value indicative of the ionospheric refraction is derived from it at 14. A second ionospheric refraction value can be acquired in different acquisition steps generally denoted by reference numeral 16, which are discussed below in more detail. The two values for the ionospheric refraction are compared at 18 and an integrity indicator is computed at 20 based on this comparison. The integrity indicator indicates if and to what extend the ionospheric refraction values are consistent one with the other.

Acquisition of the second ionospheric refraction value (steps 16) can be achieved in several ways. With respect to Fig. 1, a second pair of GNSS signals (e.g. Galileo's L1 and E5b signals) is received at 16.1 from the same satellite and the delay between the latter signals is determined at 16.2. This delay serves to derive the second ionospheric refraction value at 16.3, which is afterwards compared to the first ionospheric refraction value.

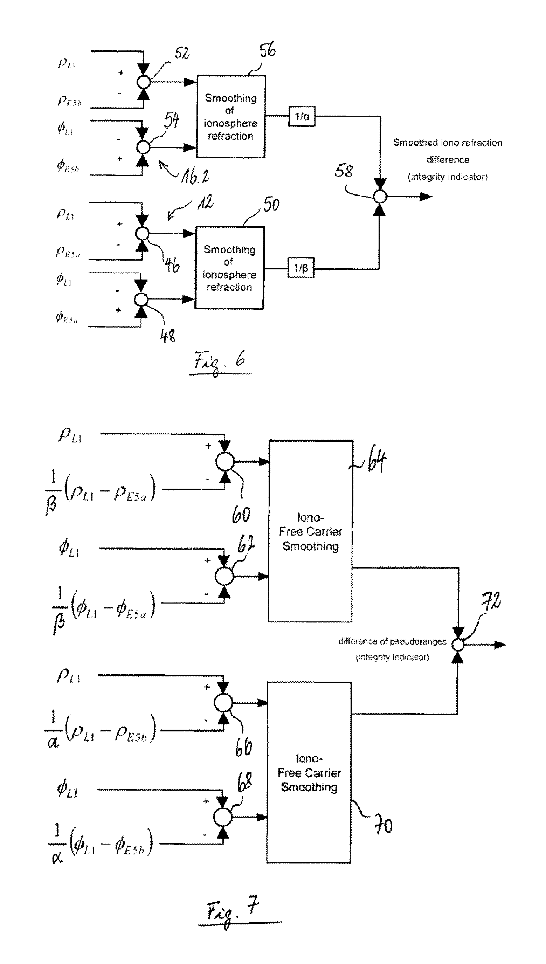

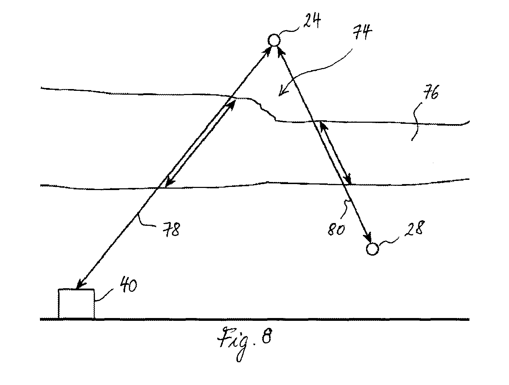

Figs. 6 and 7 show in more detail how the method represented by Fig. 1 can be put into practice, according to a first, respectively a second embodiment in a Galileo receiver capable of receiving the L1, the E5a and the E5b signals broadcast by the Galileo satellites. For a given satellite (space vehicle), the receiver performs a raw code measurement for each one of the signals L1, E5a and E5b. The raw code measurement is a pseudorange measurement based upon the Time Of Arrival (TOA) measurement of the encoded signal. Simply spoken, the raw code measurement is derived from the delay between the signal code and the receiver-generated code. Depending on receiver technology, the raw code measurement can be a value directly gained from a code-correlator loop when the correlates the signal code and the receiver-generated code or a smoothed value gained by an averaging process over multiple such code measurements. At this stage of signal processing, the phase information is typically not used for the smoothing. The ambiguity of the code measurement depends on the spatial length of the code. In case of the GPS C/A code, for instance, the code length is about 1 ms in time which equals 300 km in space. So the code measurement is unique for a range of 300 km. The raw code measurements are denoted by ρ_{L1}, ρ_{E5a} and ρ_{E5b}, respectively. In addition, the receiver measures the phase of the carrier frequency of each signal. Phase measurements are unique only in the range of a wavelength of the signal that is typically about 20 cm. Therefore, carrier phase measurements cannot be used directly for positioning in safety critical applications. But since the measurement noise of phase measurements is significantly below the measurement noise of the code measurements, phase measurements are preferably used for smoothing of the code measurements as described next. The phase measurements are denoted by Φ_{L1}, Φ_{E5a} and Φ_{E5b}, respectively. For each one of the signals, the raw code measurement and the phase measurement are part of the receiving step of the corresponding signal.

The L1 and the E5a signals form a first pair of frequencies and the L1 and the E5b signals form a second frequency pair. For each frequency pair, the difference between the raw code measurements and the difference between the phase measurements are computed. In the embodiments of Fig. 6 and 7, this corresponds essentially to the delay determinations at 12 and 16.2 in Fig. 1.

With respect to Fig. 6, for the first frequency pair, the differences ρ_{L1}-ρ_{E5a}, computed at 46 and ΦL₁-Φ_{E5a}, computed at 48, can be considered as expressions of the delay between the GNSS signals L1 and E5a. The differences ρ_{L1}-ρ_{E5a} and Φ_{L1}-Φ_{E5a} are used as input for a code-based carrier smoothing process step 50. Smoothing can be done by means of a Hatch filter or a Kalman filter or any other appropriate filter type that is capable of smoothing the noisy but unambiguous code measurement by using the carrier phase measurement that contains significantly less measurement noise but is ambiguous. The output of step 50 is divided by a coefficient β to yield the first ionospheric refraction value of this example. The coefficient β is defined by β=1-f_{L1}²/f_{E5a}², where f_{L1} is the centre frequency of L1 and f_{E5a} is the centre frequency of E5a.

For the second frequency pair, the differences ρ_{L1}-ρ_{E5b}, computed at 52 and Φ_{L1}-Φ_{E5b}, computed at 54, can be considered as expressions of the delay between the GNSS signals L1 and E5b. They are used as input for code-based carrier smoothing process step 56, which is similar to step 50. The output of step 56 is divided by a coefficient α, defined by α=1-f_{L1}²/f_{E5b}², where f_{L1} is the centre frequency of L1 and f_{E5b} is the centre frequency of E5b, to yield the second ionospheric refraction value of this example. At 58, the difference between the first and second ionospheric refraction values is computed. Computing this difference corresponds essentially to steps 18 and 20 of Fig. 1, as the difference itself may serve as integrity indicator.

Turning now to Fig. 7, neither the steps, in which the differences ρ_{L1}-ρ_{E5a} and ρ_{L1}-ρ_{E5b} of the raw code measurements are computed, are shown nor the steps, in which the differences Φ_{L1}-Φ_{E5a} and Φ_{L1}-Φ_{E5b} of the phase measurements are computed. As for the embodiment of Fig. 6, these differences can be considered as expressions of the delay between the GNSS signals L1 and E5a, respectively the GNSS signals L1 and E5b.

With respect to the first frequency pair L1/ESa, the differences ρ_{L1}-(ρ_{L1}-ρ_{E5a})/β and Φ_{L1}-(Φ_{L1}-Φ_{E5a})/β are computed at 60, respectively 62, and used in step 64 for computing a first so-called "ionosphere-free" pseudorange, which in this example corresponds to the first ionospheric refraction value. With respect to the second frequency pair L1/E5b, the differences ρ_{L1}-(ρ_{L1}-_{ρ}E_{5b})/α and ΦL₁-(Φ_{L1}-Φ_{E5b})/α are computed at 64, respectively 66, and used in step 70 for computing a second "ionosphere-free" pseudorange, which in this example corresponds to the second ionospheric refraction value. The first and second "ionosphere-free" pseudoranges are compared at 72, where their difference is computed. The difference of the "ionosphere-free" pseudoranges may serve itself as integrity indicator.

The methods illustrated in Figs. 1 and 6, respectively 1 and 7 can be used in a mobile receiver as well as in a stationary reference station of the GNSS system. These methods allow the detection of failures in the ranging source (i.e. the satellite). It should be noted that, although the embodiments of Fig. 6 and 7 have been presented with respect to GNSS signals L1, E5a and E5b, the skilled person will have no difficulties in generalizing the concepts of these embodiments to other GNSS signals at different frequencies.

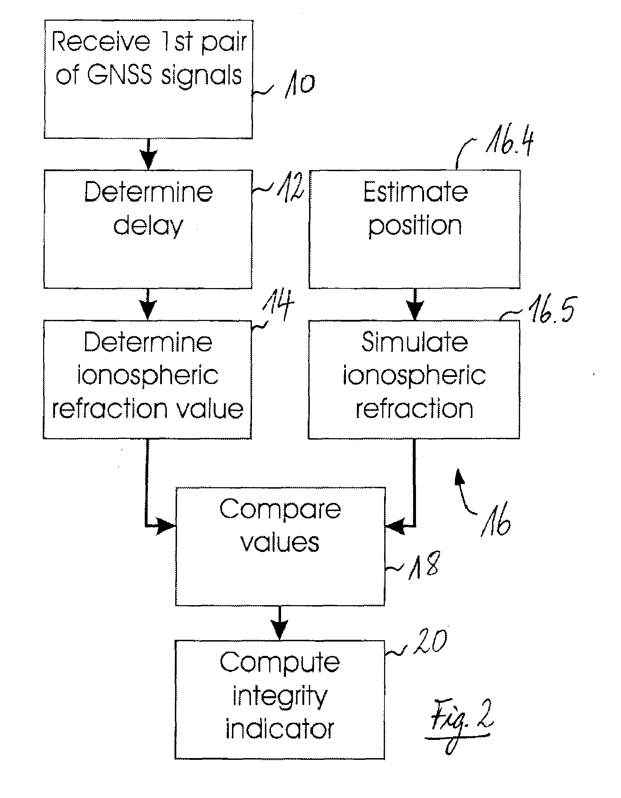

In a second embodiment of the method, illustrated in Fig. 2, the second ionospheric refraction value is acquired by simulation of ionospheric refraction at 16.5. Again, there are several ways to perform such a simulation. Preferably, however, the current position of the receiver is estimated at 16.4, e.g. using a previously computed position solution. The estimated position can be used for a ray-tracing algorithm, which simulates the propagation through the atmosphere from the satellite to the receiver's position.

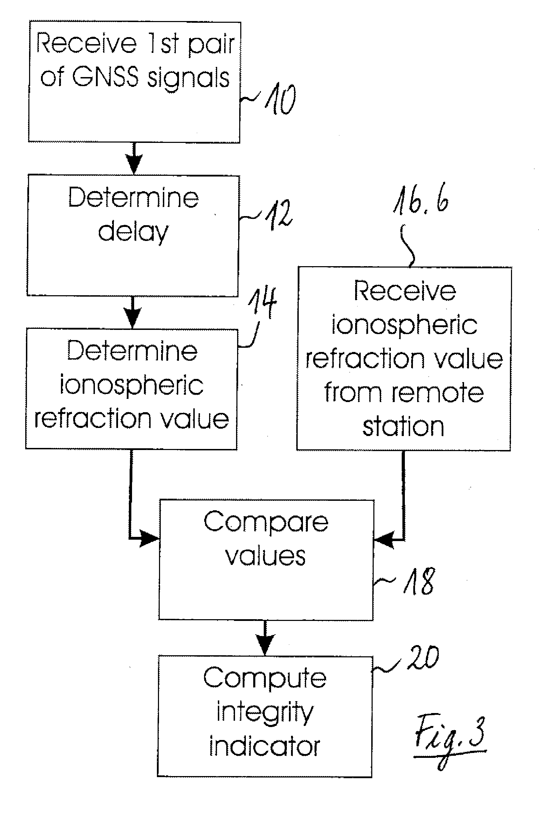

As shown in Fig. 3 at numeral 16.6 the receiver (e.g. a user receiver) can acquire the second ionospheric refraction value from a reference station, which is remote from the receiver and associated with the current geographical location of the receiver. The reference station can be a differential GNSS reference station and transmit some additional information, for instance values for ionospheric corrections or differential position information. It should be noted that the reference station can use the same frequencies for determining the second ionospheric refraction as the mobile receiver does for determining the first ionospheric refraction values. In case of Galileo, the mobile receiver and the reference station could both use the L1/E5a frequency pair or the L1/E5b frequency pair. It is not excluded, however, that the reference station calculates the second ionospheric refraction value based on a frequency pair different from the frequency pair used be the mobile receiver.

Fig. 8 schematically represents an anomaly 74 of the ionosphere 76 that may affect position accuracy of a GNSS receiver 28. Under certain atmospheric conditions, it may occur that changes in the ionosphere propagate in form of waves. Due to this phenomenon, the total electron content, which affects signal propagation in the ionosphere 76, is different for the signal path 78 from the satellite 24 to the reference station and the signal path 80 from the satellite 24 to the user terminal 28. Errors caused by such ionosphere anomalies 74 can be detected by the method as illustrated in Fig. 3 because a ionospheric refraction value is determined at the reference station 40 as well as at the user receiver 28 by means of dual frequency measurements. The ionosphere refraction value of the reference station 40 is communicated to the mobile receiver 28, which compares the two values. In case of significant discrepancies the corresponding ranging source (here: satellite 24) should be excluded from position determination at the user terminal 28. It should be noted that Fig. 8 is not to scale: as satellite 24 moves at an altitude of typically more than 20 000 km, the signal paths 78 and 80 would be nearly parallel in an actual situation.

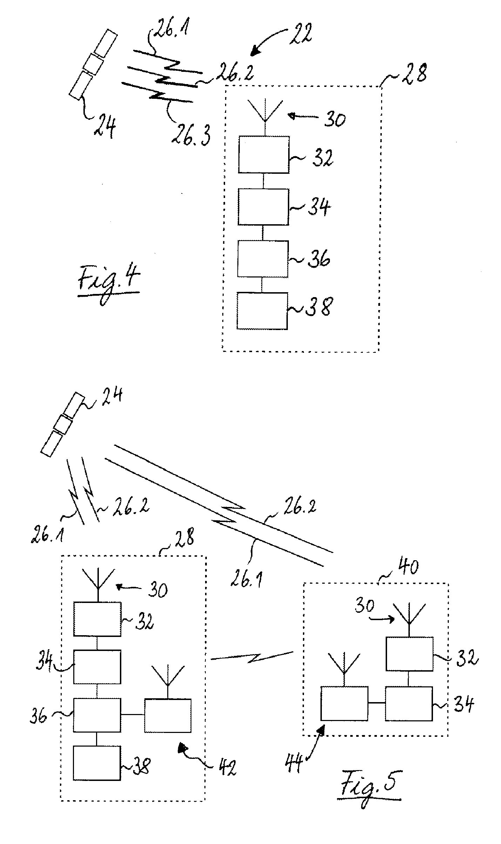

Fig. 4 shows a schematic illustration of a GNSS system 22. A GNSS satellite 24 continuously transmits GNSS signals 26.1, 26.2, 26.3 in at least three frequency bands. A GNSS receiver 28 comprises means 30 for receiving these signals, e.g. an HF pre-processing stage with an antenna. It also comprises means 32 for determining time delays between different pairs of GNSS signals, such as code correlators or code-correlator loops that determine the delay between the receiver-generated codes and the signal codes as described above, and phase detection loops that track the carrier phase. The receiver further comprises a microprocessor implementing means 34 for deriving calculated ionospheric refraction values from these delays, means 36 for comparing the ionospheric refraction values and means 38 for deriving an integrity indicator depending on the outcome of the comparison step.

In Fig. 5, the GNSS satellite 24 transmits at least two GNSS signals 26.1, 26.2 in different frequency bands. A mobile GNSS receiver 28 measures the time delay between the signals and derives a first ionospheric refraction value. A reference station 40 in the same geographical area as the mobile receiver 28 evaluates a second ionospheric refraction value by determining the delay between the signals at the reference station. The mobile receiver 28 and the reference station 40 have communication means 42, 44, so that the ionospheric refraction value of the reference station 40 can be transmitted to the mobile receiver 28. The latter comprises means 36 for comparing the two ionospheric refraction values and means 38 for deriving an integrity indicator from that comparison. It shall be noted that the reference station 40 can additionally or alternatively compute a second ionospheric refraction value by different methods, e.g. by numerical simulation of the ionospheric refraction.

In presence of at least three GNSS signals, both the mobile receiver 28 and the reference station 40 can determine more than one value for the ionospheric refraction by measuring delays. In this case, an integrity indicator can be computed on the basis of the plurality of ionospheric refraction values.

## Claims

1. A method for providing an integrity indicator pertaining to a global navigation satellite system (GNSS), **characterised in that** said integrity indicator is derived based upon a comparison of at least two values indicative of ionospheric refraction, which have been acquired by different ways.

2. A method according to claim 1, comprising the steps:
receiving a first GNSS signal at a first frequency and a second GNSS signal at a second frequency distinct from said first frequency;
determining a first value indicative of ionospheric refraction based upon an actual delay between said first and second GNSS signals;
acquiring at least one second value indicative of ionospheric refraction;
comparing said first and at least one second values indicative of ionospheric refraction; and
deriving said integrity indicator from said comparison.

3. The method according to claim 2, wherein said at least one second value indicative of ionospheric refraction is calculated based upon modelled ionosphere data and wherein said step of acquiring said at least one second value indicative of ionospheric refraction comprises receiving said modelled ionosphere data.

4. The method according to claim 2 or 3, wherein acquiring said at least one second value indicative of ionospheric refraction comprises:
receiving a third GNSS signal at a third frequency, distinct from said first frequency and from said second frequency;
determining a second value indicative of ionospheric refraction based upon an actual delay between said first and third GNSS signals.

5. The method according to any one of claims 2 to 4, wherein acquiring said at least one second value indicative of ionospheric refraction comprises:
receiving a third GNSS signal at a third frequency, distinct from said first frequency and from said second frequency;
receiving a fourth GNSS signal at a fourth frequency, distinct from said first frequency, from said second frequency and from said third frequency;
determining a second value indicative of ionospheric refraction based upon an actual delay between said third and fourth GNSS signals.

6. The method according to any one of claims 2 to 5, wherein at least one second value indicative of ionospheric refraction is acquired from a remote reference station.

7. The method according to any one of claims 1 to 6, wherein said step of determining said first value indicative of ionospheric refraction and/or said step of determining said second value indicative of ionospheric refraction comprises using an optimal filter technique.

8. A GNSS receiver **characterised by** means for acquiring at least two values indicative of ionospheric refraction by different ways and means for deriving an integrity indicator based upon a comparison of said at least two values indicative of ionospheric refraction.

9. A GNSS receiver according to claim 8, comprising:
means for receiving a first GNSS signal at a first frequency and a second GNSS signal at a second frequency distinct from said second frequency,
means for determining a first value indicative of ionospheric refraction based upon an actual delay between said first and second GNSS signals;
means for acquiring at least one second value indicative of ionospheric refraction;
means for comparing said first and second values indicative of ionospheric refraction; and
means for deriving an integrity indicator from said comparison.

10. The GNSS receiver according to claim 9, wherein said means for acquiring said at least one second value indicative of ionospheric refraction is adapted for receiving modelled ionosphere data and calculating said second value indicative of ionospheric refraction based upon said modelled ionosphere data.

11. The GNSS receiver according to claim 9 or 10, wherein said means for acquiring said at least one second value indicative of ionospheric refraction comprises:
means for receiving a third GNSS signal at a third frequency, distinct from said first frequency and from said second frequency;
means for determining a second value indicative of ionospheric refraction based upon an actual delay between said first and third GNSS signals.

12. The GNSS receiver according to any one of claims 9 to 11, wherein said means for acquiring said at least one second value indicative of ionospheric refraction comprises:
means for receiving a third GNSS signal at a third frequency, distinct from said first frequency and from said second frequency;
means for receiving a fourth GNSS signal at a fourth frequency, distinct from said first frequency, from said second frequency and from said third frequency;
means for determining a second value indicative of ionospheric refraction based upon an actual delay between said third and fourth GNSS signals.

13. The GNSS receiver according to any one of claims 9 to 12, wherein said means for acquiring said at least one second value indicative of ionospheric refraction comprises means for communicating with a remote reference station.

14. The GNSS receiver according to any one of claims 9 to 14, wherein said means for determining said first value indicative of ionospheric refraction and/or said means for determining said second value indicative of ionospheric refraction uses an optimal filter technique.
